# EUROPÄISCHE PATENTANMELDUNG

(11) **EP 0 705 045 A2**
(43) Veröffentlichungstag der Anmeldung: **03.04.1996**
(21) Anmeldenummer: 95115009.3
(22) Anmeldetag: 23.09.1995
(51) Int. Cl.: H04Q 3/545, H04M 19/00

(54) **Verfahren zur Erhaltung der Systemzeitdaten beim Ausfall der Stromversorgung in Kommunikations-Vermittlungsanlagen**

(30) Priorität: 01.10.1994 DE 4435325
(71) Anmelder: TELENORMA GMBH, D-60326 Frankfurt am Main (DE)
(72) Erfinder: Einfalt, Georg, Dipl.-Ing., D-85551 Kirchheim (DE)

(57) **Zusammenfassung**

Nach dem Ausfall der Stromversorgung in Kommunikations-Vermittlungsanlagen sollen die aktuellen Zeitdaten sofort zur Verfügung stehen, wenn die Stromversorgung wieder zur Verfügung steht. Dabei soll es nicht in jedem Fall erforderlich sein, daß eine Verbindung zu einem übergeordneten Netz aufgebaut werden muß, um von dort die aktuellen Zeitdaten zu erhalten.

Es ist eine Zeitüberwachung vorgesehen, die feststellt, ob der Ausfall der Stromversorgung kürzer oder länger als eine vorgegebene Zeit angedauert hat. Bei einer kürzeren Stromunterbrechung werden die zuvor zwischengespeicherten Zeit- und Kalenderdaten aus einem nicht flüchtigen Speicher entnommen und dem Uhr- und Kalenderwerk zur Verfügung gestellt. Nur bei länger andauernder Stromunterbrechung wird eine Verbindung zum übergeordneten Netz aufgebaut, um von dort die aktuellen Zeit- und Kalenderdaten zu empfangen.

Bei der Wiederkehr der Stromversorgung stehen die Zeit- und Kalenderdaten immer kurzfristig zur Verfügung, ohne daß in jedem Fall dafür ein Verbindungsaufbau erforderlich ist.

## Beschreibung

Die Erfindung betrifft ein Verfahren zur Erhaltung der Systemzeitdaten beim Ausfall der Stromversorgung in Kommunikations-Vermittlungsanlagen nach dem Oberbegriff des Patentanspruchs 1.

Eine Schaltungsanordnung zur Datensicherung in Kommunikations-Vermittlungsanlagen ist aus der Deutschen Offenlegungsschrift 43 25 405 A1 bekannt. Dort wird beschrieben, auf welche Weise die für den Betrieb einer Kommunikations-Vermittlungsanlage erforderlichen Daten beim Ausfall der Stromversorgung in einen elektrisch programmierbaren Festwertspeicher übernommen werden. Ein derartiger Festwertspeicher hat die Eigenschaft, die in ihm gepeicherten Daten auch dann beizubehalten, wenn die Stromversorgung ausgefallen ist. Zu den Daten, welche bei einem Ausfall der Stromversorgung in den Festwertspeicher übernommen werden, gehören auch die Systemzeitdaten, welche laufend durch ein Uhr- und Kalenderwerk aktualisiert werden. Diese Daten dienen innerhalb einer Kommunikations-Vermittlungsanlage zu Registrier- und Anzeigezwecken.

In der Deutschen Norm DIN ETS 300 102 wird die Teilnehmer-Netz-Schnittstelle Schicht 3 beschrieben, wobei Spezifikationen für Basisabläufe der Verbindungssteuerung angegeben sind. Dort ist unter anderem beschrieben (Seite 11, englischer Text), daß im Rahmen des Verbindungsaufbaus unter anderem Datums- und Zeitangaben vom Netz (ISDN) zum Benutzer, d. h. zu einem daran angeschlossenen Endgerät oder einer Konmunikations-Vermittlungsanlage übertragen werden. Diese Daten können dazu dienen, ein Uhr- und Kalenderwerk, wie es in einer Kommunikations-Vermittlungsanlage vorhanden ist, laufend zu aktualisieren. Eine derartige Aktualisierung geschieht somit bei jedem Aufbau einer Verbindung zum übergeordneten Netz (ISDN).

Wenn bei einer Kommunikations-Vermittlungsanlage die Stromversorgung ausgefallen ist, so kann das Uhr- und Kalenderwerk nicht weiter arbeiten, so daß bei einer Wiederkehr der Stromversorgung falsche Zeitdaten und ggf. auch auch falsche Datumsangaben vorliegen. Eine Korrektur dieser Daten kann erst dann stattfinden, wenn eine Verbindung zum übergeordneten Netz aufgebaut wird. Wenn verhindert werden soll, daß der Zeitraum, in dem falsche Zeit- und Datumsangaben innerhalb der Kommunikations-Vermittlungsanlage vorliegen, zu lange andauert, so müßte grundsätzlich dann sofort eine abgehende Verbindung aufgebaut werden, wenn die zuvor ausgefallene Stromversorgung wieder zur Verfügung steht. Für den Aufbau einer derartigen Verbindung, welche nur dazu dient, die Zeitdaten vom übergeordneten Netz zu empfangen, ist eine gewisse Zeit erforderlich, so daß die Zeitdaten nicht sofort zur Verfügung stehen. Außerdem sind derartige Verbindungen gebührenpflichtig.

Ausgehend vom vorgenannten Stand der Technik besteht die Aufgabe der Erfindung darin, ein Verfahren anzugeben, womit bei einem kurzzeitigen Ausfall der Stromversorgung in einer Kommunikations-Vermittlungsanlage der Aufbau einer Verbindung zum übergeordneten Netz vermieden werden kann, um die Zeitdaten zu aktualisieren. Diese Aufgabe wird mit einer Merkmalskombination gelöst, wie sie im Patentanspruch 1 angegeben ist.

Damit wird in vorteilhafter Weise erreicht, daß bei einem kurzzeitigen Ausfall der Stromversorgung die Zeitdaten sofort zur Verfügung stehen, so daß die Kommunikations-Vermittlungsanlage sofort damit weiterarbeiten kann. Vorübergehend auftretende geringe Abweichungen von der Realzeit werden automatisch bei einem ohnehin erfolgenden Aufbau einer abgehenden Verbindung korrigiert.

Die in den Unteransprüchen angegebenen Weiterbildungen der Erfindung beschreiben vorteilhafte Ausführungsformen zur Durchführung des Verfahrens.

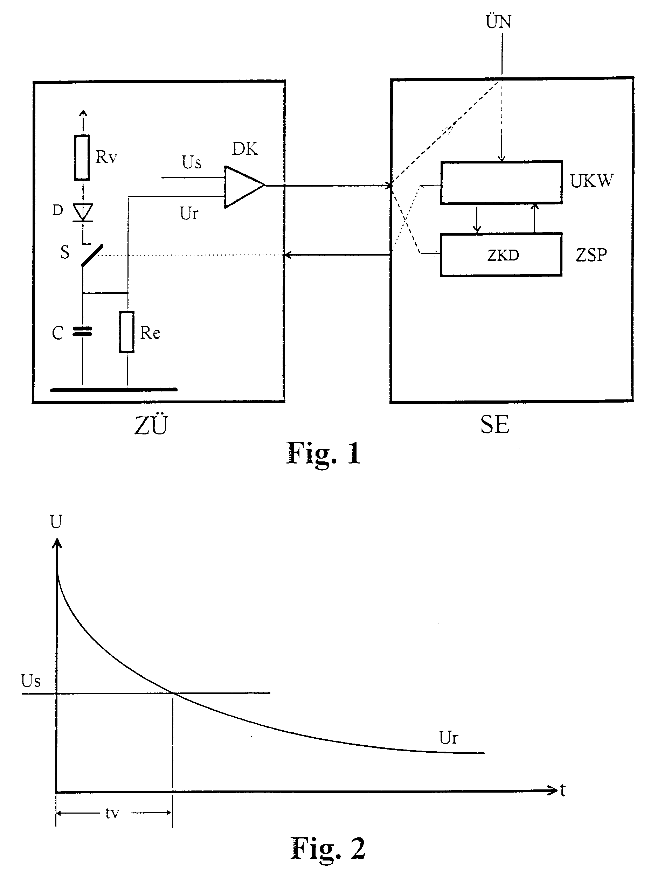

Ein Ausführungsbeispiel der Erfindung wird nachfolgend anhand von Zeichnungen näher erläutert: Es zeigt
- Figur 1: ein Blockschaltbild der für das Verfahren zuständigen Komponenten
- Figur 2: den Spannungsverlauf beim Entladen eines Kondensators zur Zeitbestimmung
- Figur 3: den Flußplan für den Ablauf des Verfahrens
Das in der Figur 1 dargestellte Blockschaltbild zeigt lediglich diejenigen Komponenten, die mit der Erfindung zu tun haben. Innerhalb einer Steuereinrichtung SE, wobei es sich um die Steuerung der Vermittlungsanlage handeln kann, sind ein Uhr- und Kalenderwerk UKW und ein Zeitdatenspeicher ZSP angeordnet. Wenn in der Kommunikations-Vermittlungsanlage ein Stromausfall auftritt, so werden die im Uhr- und Kalenderwerk UKW enthaltenen Zeit- und Kalenderdaten ZKD in den Zeitdatenspeicher ZSP übernommen. Der Zeitdatenspeicher ZSP ist so beschaffen, daß die Information auch dann erhalten bleibt, wenn die Stromversorgung ausgefallen ist. Somit sind die Zeit- und Kalenderdaten ZKD, die vor dem Stromausfall bestanden haben, vorhanden, wenn die Stromversorgung wieder einsetzt. Da jedoch das Uhr- und Kalenderwerk UKW in der Zwischenzeit nicht weiterarbeiten konnte, sind diese im Zeitdatenspeicher ZSP befindlichen Zeit- und Kalenderdaten ZKD nicht auf dem aktuellen Stand. Je nach Dauer des Ausfalls der Stromversorgung weichen also diese Zeit- und Kalenderdaten mehr oder weniger stark von der Realzeit ab.

Um entscheiden zu können, ob die im Zeitdatenspeicher ZSP befindlichen Zeit- und Kalenderdaten noch verwendbar sind, wenn die Stromversorgung wieder einsetzt, ist eine Zeitüberwachung ZÜ vorgesehen. Diese Zeitüberwachung ZÜ besteht im wesentlichen aus einem Kondensator C, welcher im Betriebszustand der Kommunikations-Vermittlungsanlage über einen Widerstand Rv und eine Diode D sowie ein durchgeschaltetes Schaltmittel S auf die Betriebsspannung aufgeladen wurde, und einem Diskriminator DK. Wenn die Stromversorgung ausfällt, so wird das Schaltmittel S geöffnet, so daß der Ladestromkreis unterbrochen ist. Daraufhin entlädt sich der Kondensator C über den Entladewiderstand Re. Dies geschieht in bekannter Weise nach einer sogenannten e-Funktion, so daß die Restspannung Ur am Kondensator C einen Verlauf hat, wie er in Figur 2 dargestellt ist. Die Ansteuerung für das Schaltmittel S ist logisch so verknüpft, daß dieses geöffnet bleibt, wenn die Stromversorgung wieder einsetzt. Je nach Dauer der Stromunterbrechung hat die Restspannung Ur am Kondensator C einen mehr oder weniger großen Pegelwert.

Der Diskriminator DK vergleicht diese Restspannung Ur mit dem Sollwert einer Schwellenspannung Us. Wenn der Diskriminator DK feststellt, daß die Restspannung Ur am Kondensator C größer ist als die Schwellenspannung Us, so hat die Stromunterbrechung kürzer angedauert als eine vorgegebene Zeit tv. In diesem Fall wird in Abhängigkeit vom Ausgangspegel des Diskriminators DK von der Steuereinrichtung SE veranlaßt, daß die Zeit- und Kalenderdaten ZKD vom Zeitdatenspeicher ZSP in das Uhr- und Kalenderwerk UKW übertragen werden. Wenn dies geschehen ist, wird vom Uhr- und Kalenderwerk UKW ein Befehl erzeugt, der zur Ansteuerung des Schaltmittels S benutzt wird, damit dieses den Ladestromkreis für den Kondensator C wieder schließt. Das Uhr- und Kalenderwerk UKW arbeitet dann weiter mit den Zeit- und Kalenderdaten ZKD, welche zum Zeitpunkt des Ausfalls der Stromversorgung vorgelegen haben.

Die vorbestimmte Zeit tv wird so bemessen, daß die Differenz zur tatsächlichen Realzeit sich in akzeptablen Grenzen hält. So ist beispielsweise eine Vorgabezeit von etwas weniger als eine Minute durchaus zu vertreten, wenn die Zeitdaten zu Anzeige- und Registrierzwecken benutzt werden, wobei nur Minutenwerte angezeigt werden. Für den Fall, daß Abweichungen von wenigen Minuten toleriert werden können, kann die Vorgabezeit tv auch auf einige Minuten ausgedehnt werden. Da in diesem Fall der Übernahme der Zeit- und Kalenderdaten ZKD aus dem Zeitdatenspeicher ZSP nicht sofort eine Verbindung zum übergeordneten Netz ÜN aufgebaut wird, erfolgt eine Korrektur spätestens dann, wenn im Rahmen des normalen Vermittlungsbetriebs die erste abgehende Verbindung zum übergeordneten Netz ÜN aufgebaut wird. Wie eingangs bereits erwähnt wurde, erfolgt bei einem Verbindungsaufbau zum übergeordneten Netz ÜN, beispielsweise zum ISDN, eine Übertragung der aktuellen Zeit- und Kalenderdaten in das Uhr- und Kalenderwerk.

Wenn beim Wiedereinsetzen der Stromversorgung durch den Diskriminator DK festgestellt wird, daß die Restspannung Ur am Kondensator C kleiner ist als die vorgegebene Schwellenspannung Us, so wird dies der Steuereinrichtung SE mitgeteilt. Es erfolgt daraufhin ein sofortiger Verbindungsaufbau zum übergeordneten Netz ÜN, so daß von dort die aktuellen Zeit- und Kalenderdaten ZKD in das Uhr- und Kalenderwerk UKW eingetragen werden. Wenn dies geschehen ist, wird das Schaltmittel S angesteuert, so daß der Kondensator C sich wieder aufladen kann. Eine Verbindung zum übergeordneten Netz ÜN wird also nur dann aufgebaut, wenn die Zeitdauer des Ausfalls der Stromversorgung größer ist als die vorbestimmte Zeit tv, so daß eine Abweichung der Zeit- und Kalenderdaten ZKD von der aktuellen Realzeit nicht mehr toleriert werden kann.

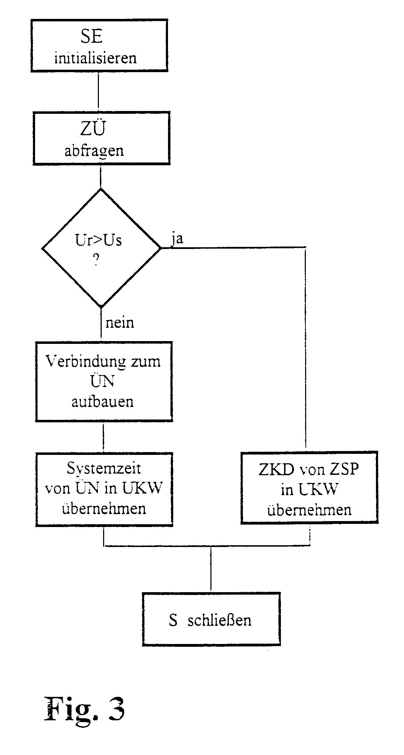

In der Figur 3 ist dargestellt, welche Schritte ablaufen, wenn beim Einsetzen der Stromversorgung die Steuereinrichtung SE initialisiert wird. Es wird dann zunächst die Zeitüberwachung ZÜ abgefragt, so daß bei dem vorgenannten Ausführungsbeispiel festgetellt werden kann, ob die Restspannung Ur größer ist (ja) oder kleiner ist (nein) als die vorgegebene Schwellenspannung Us. Falls die Restspannung Ur am Kondensator größer ist als die vorgegebene Schwellenspannung Us, werden lediglich die Zeit- und Kalenderdaten ZKD vom Zeitdatenspeicher ZSP in das Uhr- und Kalenderwerk UKW übernommen. Sodann wird das Schaltmittel S angesteuert, so daß der Ladestromkreis für den Kondensator wieder wirksam werden kann. Falls die Restspannung Ur kleiner ist als die vorgegebene Schwellenspannung Us, wird sofort eine Verbindung zum übergeordneten Netz ÜN aufgebaut und dabei die Systemzeit vom übergeordneten Netz in das Uhr- und Kalenderwerk übernommen. Wenn dies geschehen ist, wird auch in diesem Fall das Schaltmittel S den Ladestromkreis für den Kondensator C wieder herstellen.

## Patentansprüche

1. Verfahren zur Erhaltung der Sytemzeitdaten beim Ausfall der Stromversorgung in Kommunikations-Vermittlungsanlagen, um die Zeit und das Datum bereitzustellen für Anzeige- und Registrierzwecke, wobei die zum Zeitpunkt eines Stromausfalls aktuellen Zeit- und Kalenderdaten zusammen mit anderen relevanten Informationen in nicht flüchtigen Speichern übernommen werden und erhalten bleiben, und wobei eine Verbindung zu einem übergeordneten Netz aufgebaut werden kann, um von dort aus die aktuellen Zeit- und Kalenderdaten zu übernehmen,
**dadurch gekennzeichnet**,
daß mit einer Zeitüberwachungseinrichtung (ZÜ) festgestellt wird, ob ein Ausfall der Stromversorgung länger als eine vorbestimmte Zeit (tv) andauert,
daß die Zeit- und Kalenderdaten (ZKD) aus dem nicht flüchtigen Zeitdatenspeicher (ZSP) direkt zur Weiterschaltung des Uhr- und Kalenderwerks (UKW) übernommen werden, wenn der Ausfall der Stromversorgung nach einer kürzeren als der vorbestimmten Zeit (tv) beendet ist,
und daß nur dann sofort eine Verbindung zum übergeordneten Netz (ÜN) aufgebaut wird, um von dort die Zeit- und Kalenderdaten (ZKD) übernehmen zu können, wenn der Ausfall der Stromversorgung erst nach einer längeren als der vorbestimmten Zeit (tv) beendet ist.

2. Verfahren nach Anspruch 1,
**dadurch gekennzeichnet**,
daß als Zeitüberwachungseinrichtung (ZÜ) ein vorher aufgeladener Kondensator (C) und ein daran angeschlossener Diskriminator (DK) verwendet wird, der bei der Wiederkehr der Stromversorgung die noch vorhandene Restspannung (Ur) am Kondensator (C) mit einem Sollwert (Us) vergleicht, wobei an der Höhe der Restspannung (Ur) festgestellt wird, ob der Ausfall der Stromversorgung länger oder kürzer als die vorbestimmte Zeit (tv) angedauert hat.

3. Verfahren nach Anspruch 2,
**dadurch gekennzeichnet**,
daß ein Schaltmittel (S) vorgesehen ist, das den Ladestromkreis für den Kondensator (C) bei der Wiederkehr der Stromversorgung erst dann wieder einschaltet, wenn die Übernahme der Zeit- und Kalenderdaten (ZKD) vom Zeitdatenspeicher (ZSP) oder vom übergeordneten Netz (ÜN) in das Uhr- und Kalenderwerk (UKW) stattgefunden hat.
